# EUROPEAN PATENT SPECIFICATION

(11) **EP 3 217 812 B1**
(45) Date of publication and mention of the grant of the patent: **04.12.2019**
(21) Application number: 15775406.0
(22) Date of filing: 22.09.2015
(51) Int. Cl.: A23L 23/00, A23L 29/20, A23L 27/00, A23L 27/40

(54) **INCREASED SALT PERCEPTION IN PROCESSED FOOD BY INHOMOGENEOUS SODIUM DISTRIBUTION**
ERHÖHTE SALZWAHRNEHMUNG IN VERARBEITETEN NAHRUNGSMITTELN DURCH INHOMOGENE NATRIUMVERTEILUNG
AUGMENTATION DE LA PERCEPTION DE GOÛT SALÉ DANS DES ALIMENTS TRANSFORMÉS PAR RÉPARTITION NON HOMOGÈNE DU SODIUM

(30) Priority: 11.11.2014 US 201462078036 P
(43) Date of publication of application: 20.09.2017
(73) Proprietor: Société des Produits Nestlé S.A., 1800 Vevey (CH)
(72) Inventor: WOO, Kyungsoo, Broadview Heights, Ohio 44147 (US)
(74) Representative: Mollet, Beat Max
(86) International application number: PCT/EP2015/071731
(87) International publication number: WO 2016/074839

(56) References cited:
- WO-A1-2011/076528
- WO-A1-2012/093929
- WO-A1-2012/097930
- US-A1- 2003 031 774
- US-A1- 2014 314 943
- DAVID J. COOK ET AL: "Effects of Hydrocolloid Thickeners on the Perception of Savory Flavors", JOURNAL OF AGRICULTURAL AND FOOD CHEMISTRY, vol. 51, no. 10, 1 May 2003 (2003-05-01), pages 3067-3072, XP055224568, US ISSN: 0021-8561, DOI: 10.1021/jf0211581
- P. BUREY ET AL: "Hydrocolloid Gel Particles: Formation, Characterization, and Application", CRITICAL REVIEWS IN FOOD SCIENCE AND NUTRITION, vol. 48, no. 5, 8 May 2008 (2008-05-08), pages 361-377, XP055224723, USA ISSN: 1040-8398, DOI: 10.1080/10408390701347801

## Description

The present invention relates to a method and food composition for reducing the amount of sodium in food products without impacting the salty taste of said food products. In particular, the present invention pertains to food compositions comprising a non-starch hydrocolloid polymer in an aqueous food matrix.

Sodium intake by consumers has been steadily increasing up to a point much higher than recommended by health authorities. The high intake of sodium has often been related to high blood pressure, which leads to many cardiovascular diseases, and also has been related to renal disease, stomach cancer, bone demineralization, and other conditions.

Considerable efforts have been made to reduce the amount of sodium in processed foods. Existing approaches for reducing sodium include controlling the total level of salt, using salt substitutes, and/or using flavor enhancers. However, reducing sodium has been a challenge because these existing approaches affect not only saltiness, but also flavor and texture. For example, reducing sodium in foods usually negatively impacts taste because sodium provides basic flavor by itself and also enhances other flavors present in the food. Typical quality deteriorations related with the existing sodium reduction approaches are insufficient saltiness, off flavor and taste, and inferior texture. Of course, flavor and texture are extremely important factors in the decision whether to consume nutritious foods or not and the consumer enjoyment of nutritious foods.

For example: David J. Cook et al., Effects of hydrocolloid thickeners on the perception of savory flavors, J. Agric. Food Chem., 2003, 52, pp. 3067-3072, discloses effects of hydrocolloid thickeners on the perception of savory flavors, including also to saltiness. Hydroxypropylmethyl cellulose (HPMC) and λ-carrageenan thickened solutions with two distinct different concentrations were tested in sample solutions. Thereby, the hydrocolloids were first dispersed in water at 95°C and 60°C, respectively, then cooled to 5°C and solutions with NaCl were added for sensory evaluation.

US 2014/314943 A1 discloses a composition consisting of NaCl and carboxymethyl cellulose having a specified viscosity for being incorporated into a food product. For the preparation of the compositions, the dry components, including the salt and the cellulose, were always blended together and then dissolved together in hot water.

The object of the present invention is to improve the state of the art and to provide an improved solution for reducing the amount of sodium in a food product without impacting on the perceived salt taste and/or perceived saltiness of said food product by a consumer. Particularly, the present invention relates to such food products which comprise at least one non-starch hydrocolloid polymer in an aqueous matrix, such as water-, milk- and vegetable-based culinary sauces and/or soups.

The object of the present invention is achieved by the subject matter of the independent claims. The dependent claims further develop the idea of the present invention.

Accordingly, the present invention provides a composition and method for reducing the total sodium level of a food composition without impacting its salty taste.

In a first aspect, the present invention pertains to a method of producing a food composition, the method comprising the steps of: i) gelling a non-starch hydrocolloid polymer in an aqueous food matrix; ii) adding a non-sodium metal salt to the food matrix before and/or during gelling of the non-starch hydrocolloid polymer in an amount of 0.01 to 5 wt% based on the food composition; iii) cooling the food matrix comprising the jellified hydrocolloid polymer; and iv) adding sodium to the cooled food matrix to form the food composition.

In a second aspect, the present invention relates to a food composition obtainable by the present method.

The inventor surprisingly found that non-starch hydrocolloid food polymers have reduced affinity for sodium ions after jellification, than when sodium ions are present during the jellification process. In the present document, jellification of a non-starch hydrocolloid polymer refers to a transition from a particulate form of said polymer into a solid or semi-solid gel, which is a dilute cross-linked network of the hydrocolloid throughout a whole volume of a fluid food composition, exhibiting no flow when in a steady-state within that fluid. Therefore, when sodium is added to a composition comprising a jellified non-starch hydrocolloid polymer in the form of a solid or semi-solid gel, the sodium may reside much more in the liquid and fluid aqueous matrix surrounding that solid or semi-solid cross-linked hydrocolloid network, than penetrating into the polymer network gel. Consequently, the concentration of residual sodium in such a food product is much higher in the fluid aqueous matrix than in the jellified hydrocolloid gel within that fluid. The distribution of the sodium more in the aqueous phase causes the sodium to be more available for saltiness perception when the composition is consumed relative to compositions in which the sodium is mainly or equally present in the polymer gel. This finding allows producing food compositions such as culinary sauces, soups and other food compositions comprising such jellified hydrocolloids, with reduced amounts of total sodium content without compromising on the perceived salty taste. The sauces and other food compositions obtained by the present invention provide excellent organoleptic properties, and in particular enhanced saltiness perception while maintaining good taste and texture.

Furthermore, it has been found by the inventor that this concept of reducing sodium content while maintaining saltiness perception works best and ideally for culinary food products which are frozen after preparation and distributed and sold to consumers in the form of frozen food products.

### Brief description of the Drawings

FIG. 1: Drawings of food polymer (branched structure with high molecular weight chains of xanthan) used to form texture in food (left panel), and delayed sodium addition in combination with the use of positively charged metal ions (right panel). It illustrates controlled sodium bounding and entrapment in solid to semi-solid gel during cooling and storage (left panel) to provide enhanced saltiness perception.
FIG. 2 shows a flowchart of a method of the present invention for achieving improved saltiness perception by inhomogeneous salt distribution.
FIG.3 Sensory data from a model texture system composed of xanthan with and without the presence of KCl for inhomogeneous sodium distribution. (*) Attribute measure din terms of time (short to long).
FIG.4 Sensory data from a model texture system composed of xanthan with and without the presence of CaCl₂ for inhomogeneous sodium distribution. (*) Attribute measure din terms of time (short to long).
FIG.5 Sensory data from a model texture system composed of kappa carrageenan with and without the presence of KCl for inhomogeneous sodium distribution. (*) Attribute measure din terms of time (short to long).
FIG.6 Sensory data from a model texture system composed of iota carrageenan with and without the presence of KCl for inhomogeneous sodium distribution. (*) Attribute measure din terms of time (short to long).

### Detailed description of the invention

The present invention pertains to a method of producing a food composition, the method comprising the steps of: i) gelling a non-starch hydrocolloid polymer in an aqueous food matrix; ii) adding a non-sodium metal salt to the food matrix before and/or during gelling of the non-starch hydrocolloid polymer in an amount of 0.01 to 5 wt% based on the food composition; iii) cooling the food matrix comprising the jellified hydrocolloid polymer; and iv) adding sodium to the cooled food matrix to form the food composition. In one embodiment, the method of the present invention further comprises the step of freezing the food composition after the addition of the sodium to the cooled food matrix.

Before explaining at least one embodiment of the presently disclosed invention in detail, it is to be understood that the presently disclosed invention is not limited in its application to the details of construction and the arrangement of the components or steps or methodologies set forth in the following description or illustrated in the drawings. The presently disclosed inventivon is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the presently disclosed inventivon shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which this presently disclosed inventive concept(s) pertains.

All of the compositions and/or methods disclosed herein can be made and executed without undue experimentation in light of the present disclosure.

As utilized in accordance with the present disclosure, the following terms, unless otherwise indicated, shall be understood to have the following meanings:
The use of the word "a" or "an" when used in conjunction with the term "comprising" in the claims and/or the specification may mean "one", but it is also consistent with the meaning of "one or more," "at least one," and "one or more than one." Throughout this application, the term "about" is used to indicate that a value includes the inherent variation of error for the device, the method being employed to determine the value, or the variation that exists among the study subjects. For example, but not by way of limitation, when the term "about" is utilized, the designated value may vary by plus or minus twelve percent, or eleven percent, or ten percent, or nine percent, or eight percent, or seven percent, or six percent, or five percent, or four percent, or three percent, or two percent, or one percent.

As used in this specification and claim(s), the words "comprising" (and any form of comprising, such as "comprise" and "comprises"), "having" (and any form of having, such as "have" and "has"), "including" (and any form of including, such as "includes" and "include"), or "containing" (and any form of containing, such as "contains" and "contain") are inclusive or open-ended and do not exclude additional, unrecited elements or method steps.

The term "or combinations thereof" as used herein refers to all permutations and combinations of the listed items preceding the term. The skilled artisan will understand that typically there is no limit on the number of items or terms in any combination, unless otherwise apparent from the context.

As used herein, the term "substantially" means that the subsequently described event or circumstance completely occurs or that the subsequently described event or circumstance occurs to a great extent or degree. For example, when associated with a particular event or circumstance, the term "substantially" means that the subsequently described event or circumstance occurs at least 80% of the time, or at least 85% of the time, or at least 90% of the time, or at least 95% of the time.

Finally, as used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily referring to the same embodiment, although the inventive concepts disclosed herein are intended to encompass all combinations and permutations including one or more of the features of the embodiments described herein.

The term "gelling" herein means 'becoming or causing to become a gel'. A gel is defined as a dilute cross-linked network of a hydrocolloid polymer within a liquid that is expanded throughout the whole volume of that liquid. The gel exhibits no flow when in a steady-state within the liquid. "Gelling" of a hydrocolloid polymer results in a "jellified hydrocolloid polymer". The process is referred to as jellification.

The "aqueous food matrix" refers to the liquid that comprises the non-starch hydrocolloid polymer. The liquid comprises a continuous phase of water, which derives for example from added water, milk, vegetable juice and/or fruit juice.

"Sodium" refers to sodium ions resulting for example from the dissolution of regular salt, NaCl, in an aqueous food matrix.

The present invention is related to food compositions having inhomogeneous sodium distribution. As used herein, "inhomogeneous sodium distribution" means that more of the sodium is located in the aqueous phase of the food composition relative to the aqueous phase of food compositions prepared by a conventional process for the same food composition that comprises texture ingredients, especially food polymers forming semi-solid and solid gels. For example, the sodium entrapped by or bound to the food polymer gel is a smaller amount than the sodium that is not entrapped by or bound to the food polymer gel. It is important to note, however, that under typical conditions the food composition does not have distinct visible aqueous and polymer phases; the aqueous phase discussed herein is obtained by separating it from the polymer phase by simple phase separation or centrifugation. The food polymers can form a solid or semi-solid gel that resists free movement of sodium.

The inventor discovered that a food polymer transition results in a reduced affinity for sodium, and adding sodium after the food polymer transition distributes sodium more in the aqueous phase rather than in the polymer phase and therefore results in the improvement of saltiness. This effect advantageously enables a reduction in the sodium content of the food product without impacting the salty taste. An advantage of the present invention is therefore to reduce the sodium content in food compositions without compromising the organoleptic properties such as flavor, texture and perceived saltiness. A still further advantage of the present invention is to reduce the total amount of sodium while maintaining flavor and texture without relying on and/or using salt substitutes or a flavor enhancer.

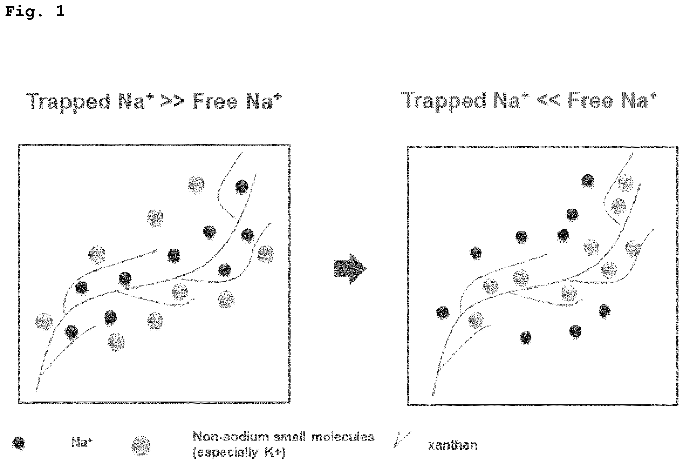

For example, as shown in the Fig. 1, if sodium is present when the cooked texture forming food polymer is cooled, it will become a solid or semi-solid gel that entraps the sodium in a biopolymer network that also binds the sodium.

Accordingly, sodium is added after the jellified hydrocolloid polymer ingredient has been cooled. During cooking, the food polymer structure expands by loosened food polymer chain association and re-associates to form a solid or semi-solid gel after cooling. The formed solid to semi-liquid gel resists migration of sodium into the internal structure of food polymer network, as shown in Fig. 1. In contrast, prior art methods in which the sodium is present during the cooking or the initial cooling result in sodium entrapment and complex formation within the food polymer network.

In one embodiment, the method of the present invention further comprises the step of freezing the food composition after the addition of the sodium to the cooled food matrix.

The resultant food composition can be chilled, frozen or otherwise preserved for later reheating and consumption by the consumer. For example, the food composition can be positioned in a container, such as a microwaveable tray, and then be chilled and/or frozen. In one embodiment, therefore, the method of the present invention comprises the step of freezing the food composition after the addition of the sodium to the cooled food matrix. In an embodiment, the food composition can be stable for up to eighteen months under freezing conditions. After purchase, the consumer can then heat the food composition for consumption individually or with other food products and at a temperature of the food composition that is above room temperature. The food product can maintain its organoleptic properties during and after re-heating. The advantage of freezing the food composition of the present invention is that the inhomogeneous distribution of sodium ions between the hydrocolloid polymer gel and the aqueous liquid food matrix is fixed and preserved for a much longer period of time than when keeping the food composition e.g. at room temperature. The risk and occurrence of sodium ions migrating more and more over time from the liquid food matrix into the polymer gel is reduced when the food composition is maintained in frozen form below a temperature of 0°C.

The method of the present invention comprises the step of adding a metal salt to the food matrix before and/or during gelling of the non-starch hydrocolloid polymer. This metal salt is a non-sodium metal salt. Thereby advantageously, the entrapment and complex formation of the ions of the metal salt, such as a non-sodium metal salt, with the hydrocolloid during the gel formation of the food hydrocolloid polymer can be used to further decrease the sodium affinity of the said polymer and as a further benefit also mask the possible off taste associated with high levels of a metal salt such as e.g. potassium chloride.

In one embodiment, the metal salt is selected from the group consisting of a potassium salt, a calcium salt and a magnesium salt. For example, the metal salt can be selected from potassium chloride or calcium chloride. The metal salt is added in an amount of 0.01 to 5 wt% based on the food composition. The metal salt may also be added in amounts of 0.05 to 3 wt%, 0.1 to 2 wt%, or of 0.3 to 1.5 wt% of the food composition. The wt percentages expressed herein are by weight of the total weight of the food composition of the present invention.

An advantage of the present invention is the formation of a food polymer that entraps or binds metal ions including potassium, calcium ions and mixtures thereof. Yet another advantage of the present invention is the increased levels of potassium chloride and/or calcium chloride which can be applied without generating the bitter off taste associated with such potassium chloride levels.

In another related embodiment, the potassium chloride is added in an amount of 10 or 20 wt% to 150 wt% based on the weight amount of added sodium salt to the final food composition of the present invention.

In a particular embodiment, the food composition is cooked in the presence of potassium chloride. For example, the mixture of a non-starch hydrocolloid polymer and water undergoing cooking can comprise from 0.1 wt% to 2.0 wt% of potassium chloride, or about 0.75 wt% of potassium chloride, based on the total weight of the food composition. The mixture of the non-starch hydrocolloid polymer and water undergoing cooking can comprise from 20 to 150 wt% of potassium chloride, from 30 to 80 wt% of potassium chloride, or about 60 wt% of potassium chloride, based on the final total amount of sodium in the food composition. The potassium chloride can provide nutritional benefits, can contribute to the texture of the food composition, and can decrease the sodium affinity of the gelled food polymers. The potassium chloride can be added to the mixture of food polymer and water before and/or during the cooking step.

Solid and semi-solid gel formation of non-starch hydrocolloid polymers can be achieved with or without the combination with heat by coexisting ingredients, such as for example acid, sugar, or other ingredients accelerating solid to semi-solid gel formation.

In one embodiment, gelling the non-starch hydrocolloid polymer is achieved by heating the non-starch hydrocolloid polymer in the aqueous food matrix. Particularly, heating is subjecting the food matrix comprising the non-starch hydrocolloid polymer to a temperature from 50 to 125°C for 1 to about 20 minutes. In an embodiment, the heating is cooking the non-starch hydrocolloid polymer in the aqueous food matrix in order to achieve gelling of the polymer.

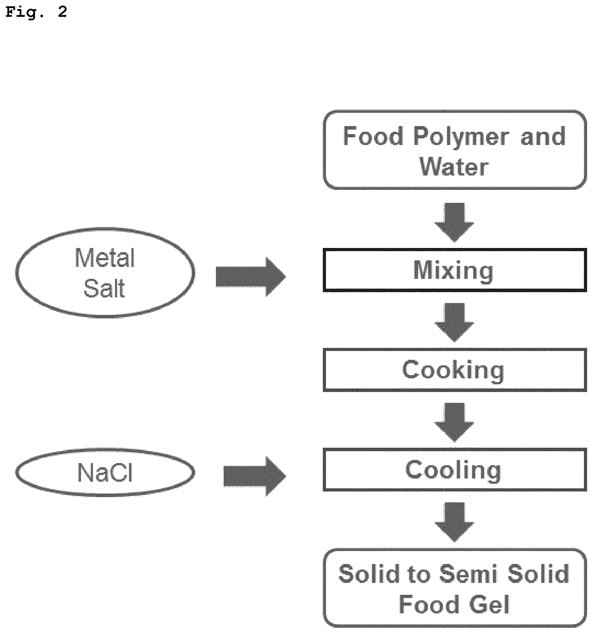

As illustrated in Fig. 2, the food composition may be prepared by mixing the food polymer with water and then cooking the mixture. For example, the mixture of the food polymer and water may be cooked at a temperature from 80 to 95 °C, or to about 90 °C, for a time period from 10 to 20 minutes. Higher temperatures can be used with pressurized cooking.
Optionally, other components of the food composition can be included in the mixing and cooking stages in addition to the hydrocolloid polymer and the water. In one embodiment, the food composition is cooked in the absence of additional sodium salt other than any sodium already present naturally in the food polymer.

After the gelling step, the food matrix comprising the jellified polymer is cooled. The cooling of the food matrix may be to a temperature from 4 to 50 °C for up to twenty-four hours.

The cooked mixture can be cooled to allow the components of food polymers to re-associate and form a solid to semi-solid gel comprising a biopolymer network. For example, the cooked food composition can be cooled to a lower temperature, such as a temperature from 4 to 50 °C, or from 4 to 25°C, for up to twenty-four hours, or up to one hour, or up to thirty minutes. In an embodiment in which potassium chloride is present during the cooking step, the potassium chloride can then be at least partially or fully entrapped and/or bound by the gel comprising the biopolymer network.

Although Fig. 2 shows the cooling as one step, the cooling can involve any number of steps and any number of temperatures. For example, the cooling can comprise a first cooling step at a first temperature and a second cooling step at a second temperature lower than the first temperature. A non-limiting example of such an embodiment is a cooling comprising a first cooling step for thirty minutes to one hour at 50 °C and a second cooling step for thirty minutes to one hour at 4 °C. However, the cooling step is not limited to a specific embodiment, and the cooling can be any decrease in temperature over a predetermined time period such that the non-starch hydrocolloid forms a solid or semi-solid gel comprising the biopolymer network.

In a further embodiment, the non-starch hydrocolloid polymer of the present invention is selected from the group consisting of xanthan, carrageenan, pectin, cellulose, agar, gelatin, gellan, galactomannan, gum Arabic, guar gum, locust bean gum and alginate. Suitable food polymers for food compositions according to the present invention further include gel forming food polymers, including iota carrageenan, kappa carrageenan, lambda carrageenan, pectin and pectin derivatives, gellan gum, curdlan, arabinoxylan, cellulose and cellulose derivatives, certain milk proteins, egg proteins, vegetable proteins, and combinations thereof. The food polymers comprise modified forms of those polymers by physical and/or chemical treatments. In one specific embodiment, the non-starch hydrocolloid of the present invention is selected from the group consisting of xanthan, iota carrageenan and kappa carrageenan, or a combination thereof.

In an embodiment, the non-starch hydrocolloid polymer is present in the food composition of the present invention in an amount of 0.05 to 6 wt%, or in an amount of 0.1 to 3 wt% based on the total food composition.

In another embodiment, the sodium is added to the food composition of the present invention after the cooling of the food matrix comprising the jellified hydrocolloid polymer, in the form of sodium chloride in an amount of 0.1 to 5 wt% based on the food composition, or in an amount of 0.2 to 2.5 wt% based on the food composition, or in an amount of 0.3 to 2 wt% based on the food composition.

In a second aspect, the present invention relates to a food composition obtainable by the present method. Particularly, the invention relates to a food composition comprising a jellified non-starch hydrocolloid polymer in an aqueous food matrix and sodium, wherein the concentration of sodium in the aqueous food matrix is higher than the concentration of sodium entrapped in the jellified non-starch hydrocolloid polymer. As mentioned above, the advantage of such a food composition is that the composition still maintains a well perceivable salty taste while in fact having a lower total sodium concentration than in comparison to other equivalent prior art food compositions which have equal sodium concentrations throughout the food compositions.

Optionally, other food ingredients can be added to the cooled mixture of the food composition of the present invention in addition to the sodium. For example, an acidifying component and/or an alkalinizing component can be added with the sodium to the cooled mixture. For example, the sodium can be added to the cooled mixture together with lactic acid, acetic acid and/or other fruit derived acids such as citric acid, malic acid and the like. The acidifying component and/or the alkalinizing component may harden the gel structure and thereby decrease the mobility of the sodium to enhance the distribution of the sodium in the aqueous phase.

After adding sodium and optionally other additional components to the cooled mixture, the resultant food composition can be stored. For example, the food composition can be stored at 4 °C for up to twenty-four hours, or up to one hour and or up to thirty minutes. The food composition can also be frozen either immediately after it has been cooled down to 4°C or within a short period after it has been cooled, e.g. within thirty minutes after cooling.

The food composition of the present invention can be added to one or more other food items. For example, if the food composition of the present invention is a sauce, the sauce can be added to meat, fish, pasta or vegetables dishes. It can also be added to fruits or grain dishes such as rice. Non-limiting examples of products that can be formed using the food composition of the present invention are macaroni and cheese, fettuccini Alfredo, mashed potatoes, potatoes au gratin, and other food product that are at least partially covered with a cheese sauce of the present invention. The food composition of the present invention can also be a foundation for a culinary product such as a soup, a gravy, a spread or a condiment.

Furthermore, the food composition of the present invention can comprise further additional ingredients relative to the gel forming food polymers. For example, the food composition can comprise fat, milk solids, stabilizers, emulsifiers, spices, seasonings, proteins, and any combination thereof. Non-limiting examples of suitable fats include high oleic sunflower oil and high oleic safflower oil. The essential fatty acids linoleic and α-linolenic acid may also be added as may small amounts of oils containing high quantities of preformed arachidonic acid and docosahexaenoic acid such as fish oils or microbial oils.

The food composition of the present invention can further comprise proteins. Non-limiting examples of such suitable proteins include dairy-based proteins, plant-based proteins, animal-based proteins and artificial proteins. Dairy-based proteins include, for example, casein, caseinates (e.g., all forms including sodium, calcium, potassium caseinates), casein hydrolysates, whey (e.g., all forms including concentrate, isolate, demineralized), whey hydrolysates, milk protein concentrate, and milk protein isolate. Plant-based proteins include, for example, soy protein (e.g., all forms including concentrate and isolate), pea protein (e.g., all forms including concentrate and isolate), canola protein (e.g., all forms including concentrate and isolate), other plant proteins that commercially are wheat and fractionated wheat proteins, corn and corn fractions including zein, rice, oat, potato, peanut, green pea powder, green bean powder, and any proteins derived from beans, lentils, and pulses.

The food composition of the present invention can further comprise an emulsifier. Non-limiting examples of suitable emulsifiers include monodiglycerides, diglycerides, polysorbates, sucrose esters of fatty acids, sucroglycerides, egg yolk, lecithin, propylene glycol esters of fatty acids, sorbitans, polyglycerol ester of fatty acids, lactylates and any combinations thereof. In one particular embodiment of the present invention, the food composition does not include an emulsifier.

In an embodiment, the food composition is a sauce or comprises a sauce. The food composition may be a water-based culinary sauce, a dairy-based culinary sauce, or a tomato-based culinary sauce. Particularly, such suitable sauces of the present invention include macaroni and cheese sauce, steak sauce, pizza sauce, Alfredo sauce, sweet and sour sauce, gravy sauce, and a filling sauce.

Those skilled in the art will understand that they can freely combine all features of the present invention disclosed therein. In particular, features described for the method of producing the food composition can be combined with the product claims of the food composition of the present invention, and vice versa. Furthermore, those features can also be combined with the method for reducing sodium in a food composition. Further advantages and features of the present invention are apparent from the figures and examples.

### Examples:

The following non-limiting examples present scientific data developing and supporting the concept of the inhomogeneous salt distribution favoring the aqueous phase of a food composition.

### Example 1: Texture System Preparation

Texture systems containing only a food polymer, salts and water were prepared according to the Tables 1-4 and then evaluated for sensory salt impact. The reference samples were made by cooking 1.0 g of the indicated food texture polymer with 6 g of sodium chloride in 200 ml of water (3%, w/w) at 90 °C for 10 min. The cooked non-starch hydrocolloid polymer and water mixture was then cooled to room temperature and stored at 4°C for one day to allow the food texture polymer to re-associate and form a solid to semi-solid gel. The mixture was stored one more day at the same condition after adding 200 ml of water, and then the reference sample was compared with the corresponding test samples. Other reference samples were prepared by adding a selected non-sodium metal salt before cooking to provide competing ionic effect against sodium for the non-starch hydrocolloid polymer.

The test samples were prepared by cooking a selected food polymer for texture in water at the same condition as the control samples but without sodium chloride. After storing the test samples one day at 4°C, 200 ml of sodium chloride solution (3%, w/v) was added to the cooked mixture. Test and reference samples were stored one more day in a refrigerator.

The impact of a positively charged non-sodium metal ion on sodium distribution was tested using potassium chloride and calcium chloride as also indicated in the Tables 1 to 4. Model texture systems were prepared by adding the same amounts of potassium chloride (6 g) before cooking in the procedure for the test sample preparations. In case of calcium chloride, the level was controlled to 0.8g for proper range of saltiness for sensory evaluation.

The clear top layers of the reference and test samples were then collected after one day storage in a refrigerator, centrifuged (at 4'500 rpm for 30 minutes at 5 °C), and analyzed for saltiness perception by sensory analysis.

**Table 1. Composition of model texture system composed of xanthan with or without the presence of KCl for inhomogeneous sodium distribution**

| Name | Water* | Xanthan* | KCl* | NaCl | |
|---|---|---|---|---|---|
| | | | | Before cooking | After cooking |
| Reference 1-No KCl | 400g | 1g | - | 6g | - |
| Reference 2-KCl | 400g | 1g | 6g | 6g | - |
| Test 1-No KCl | 400g | 1g | - | - | 6g |
| Test 2-KCl | 400g | 1g | 6g | - | 6g |

| | | | | | |
|---|---|---|---|---|---|
| *Ingredients added before cooking | | | | | |

**Table 2. Model texture system composed of xanthan with or without the presence of CaCl₂ for inhomogeneous sodium distribution**

| Name | Water* | Xantha n* | CaCl₂* | NaCl | |
|---|---|---|---|---|---|
| | | | | Before cooking | After cooking |
| Reference 1-No CaCl₂ | 400g | 1g | - | 6g | - |
| Reference 2-CaCl₂ | 400g | 1g | 0.8g | 6g | - |
| Test 1-CaCl₂ | 400g | 1g | - | - | 6g |
| Test 2-CaCl₂ | 400g | 1g | 0.8g | - | 6g |

| | | | | | |
|---|---|---|---|---|---|
| *Ingredients added before cooking | | | | | |

**Table 3. Model texture system composed of kappa-carrageenan with or without the presence of KCl for inhomogeneous sodium distribution**

| Name | Water* | kappa-carrageenan* | KCl* | NaCl | |
|---|---|---|---|---|---|
| | | | | Before cooking | After cooking |
| Reference 1-No KCl | 400g | 1g | - | 6g | - |
| Reference 2-KCl | 400g | 1g | 6g | 6g | - |
| Test 1-No KCl | 400g | 1g | - | - | 6g |
| Test 2-KCl | 400g | 1g | 6g | - | 6g |

| | | | | | |
|---|---|---|---|---|---|
| *Ingredients added before cooking | | | | | |

**Table 4. Model texture system composed of iota carrageen with or without in the presence of KCl for inhomogeneous sodium distribution**

| Name | Water* | iota carrageen* | KCl* | NaCl | |
|---|---|---|---|---|---|
| | | | | Before cooking | After cooking |
| Reference 1-No KCl | 400g | 1g | - | 6g | - |
| Reference 2-KCl | 400g | 1g | 6g | 6g | - |
| Test 1-No KCl | 400g | 1g | - | - | 6g |
| Test 2-KCl | 400g | 1g | 6g | - | 6g |

| | | | | | |
|---|---|---|---|---|---|
| *Ingredients added before cooking | | | | | |

### Example 2: Sensory evaluation

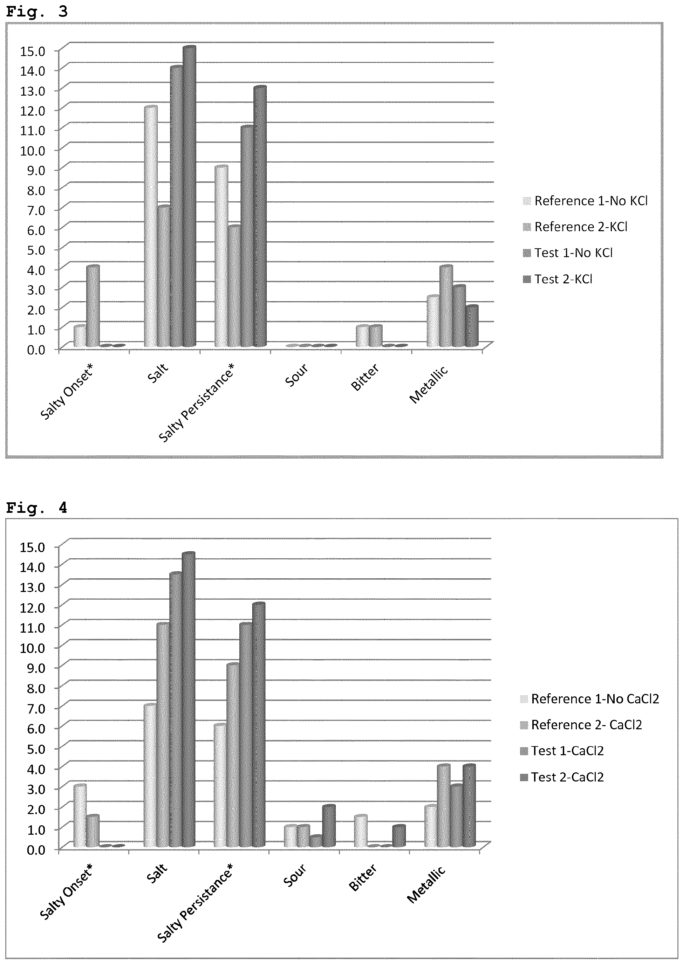

Consensus sensory evaluation was performed by a trained, descriptive panel to provide more accurate evaluation of the sauces prepared by the new process. A summary of sensory evaluation results for the model sauces is shown in Fig. 3-6. Consensus Analysis is a research method that uses a trained panel to provide measures of product sensory attribute similarities and differences. Nine to eleven assessors convened during glossary development to discuss and agree upon a common language to fully describe the samples included in the test. Panelists evaluated each product individually, and scores were collected in a 0-15 linear scale. Water solutions were presented in two ounce plastic cups. Panelists cleansed their palates between samples with unsalted crackers and room temperature water.

Saltiness perception on the model texture system with xanthan and KCl (as of Table 1): Adding sodium chloride after cooking and cooling of the disclosed process of this invention, increased saltiness perception in both samples prepared with and without the use of KCl (Fig 3). The presence of KCl in the disclosed process resulted in an additional saltiness perception improvement. The finding looks to provide ways to reduce sodium to give similar or higher saltiness of reduced sodium food products compared to full sodium products. As expected, simple addition of KCl without the use of the disclosed process reduced saltiness perception in this testing. The overall saltiness perception improvement of test samples was well correlated with 1) shortened time to require saltiness perception (salty onset) and increased duration of saltines (salty persistence).

Saltiness perception on the model texture system of xanthan and CaCl₂ (as of Table 2): Adding sodium chloride after cooking and cooling with the disclosed process of this invention, increased saltiness perception in both samples prepared with and without the use of CaCl₂ (Fig 4). The presence of CaCl₂ in the disclosed process provided additional saltiness perception improvement, which was similar to what we observed in the trials of KCl formulation mentioned earlier. Compared with simple addition of CaCl₂, the disclosed process was shown to be more efficient to enhance saltiness in the trials. The overall saltiness perception improvement of the test samples was well correlated with 1) shortened time to require saltiness perception (salty onset) and duration of saltines (salty persistence).

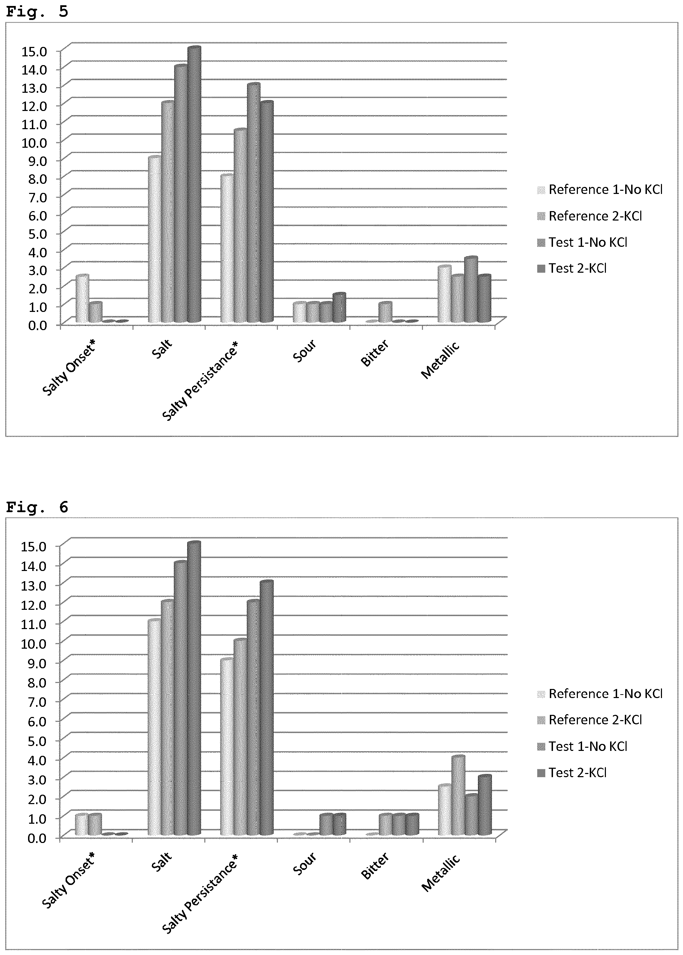

Saltiness perception on the model texture system with kappa carrageenan and KCl (as of Table 3): Adding sodium chloride after cooking and cooling of the disclosed process of this invention, increased saltiness perception in both samples prepared with and without the use of KCl (Fig 5). The presence of KCl in the disclosed process resulted in an additional saltiness perception improvement, which was similar to what we observed in the trials of KCl formulation mentioned earlier. Simple addition of KCl achieved saltiness improvement but the disclosed process was showed to be more efficient to enhance saltiness in this trials. The overall saltiness perception improvement of the test samples was well correlated more with shortened time to require saltiness perception (salty onset) than duration of saltines (salty persistence).

Saltiness perception on the model texture system of iota carrageenan and KCl (as of Table 4): Adding sodium chloride after cooking and cooling of the disclosed process of this invention, increased saltiness perception in both samples prepared with and without the use of KCl (Fig 6). The use of KCl in the disclosed process provided additional saltiness perception improvement, which was similar to what we observed in the previous trials formulated with KCl or CaCl₂. Simple addition of KCl achieved saltiness improvement but the disclosed process looked more efficient to enhance saltiness in this trials. The overall saltiness perception improvement of the test samples was well correlated with 1) shortened time to require saltiness perception (salty onset) and duration of saltines (salty persistence).

## Claims

1. A method of producing a food composition, the method comprising the steps of:
- gelling a non-starch hydrocolloid polymer in an aqueous food matrix;
- adding a non-sodium metal salt to the food matrix before and/or during gelling of the non-starch hydrocolloid polymer in an amount of 0.01 to 5 wt% based on the food composition;
- cooling the food matrix comprising the jellified hydrocolloid polymer; and
- adding sodium to the cooled food matrix to form the food composition.

2. The method according to claim 1, further comprising the step of freezing the food composition after the addition of the sodium to the cooled food matrix.

3. The method according to claim 1 or 2, wherein the metal salt is selected from the group consisting of a potassium salt, a calcium salt and a magnesium salt.

4. The method according to one of the claims 1-3, wherein the metal salt is added in an amount of 0.1 to 3 wt% based on the food composition.

5. The method according to one of the claims 1 to 4, wherein gelling the non-starch hydrocolloid polymer is achieved by heating the non-starch hydrocolloid polymer in the aqueous food matrix.

6. The method according to claim 5, wherein heating is subjecting the food matrix comprising the non-starch hydrocolloid polymer to a temperature from 50 to 125°C for 1 to 20 minutes.

7. The method according to one of the claims 1 to 6, wherein cooling the food matrix is subjecting the food matrix to a temperature from 4 to 50 °C.

8. The method according to one of the claims 1 to 7, wherein the non-starch hydrocolloid polymer is selected from the group consisting of xanthan, carrageenan, pectin, cellulose, agar, gelatin, gellan, galactomannan, gum Arabic, guar gum, locust bean gum and alginate, or a combination thereof.

9. The method according to claim 8, wherein the non-starch hydrocolloid polymer is selected from the group consisting of xanthan, iota carrageenan and kappa carrageenan, or a combination thereof.

10. The method according to one of the claims 1 to 9, wherein the non-starch hydrocolloid polymer is present in the food composition in an amount of 0.05 to 6 wt% based on the food composition.

11. The method according to claim 10, wherein the non-starch hydrocolloid polymer is present in the food composition in an amount of 0.1 to 3 wt% based on the food composition.

12. The method according to one of the claims 1 to 11, wherein the sodium is added in the form of sodium chloride in an amount of 0.1 to 5 wt% based on the food composition.

13. The method according to claim 12, wherein the sodium is added in the form of sodium chloride in an amount of 0.2 to 2.5 wt% based on the food composition.

14. A food composition obtainable by the method according to one of the claims 1 to 13.

15. The food composition according to claim 14, wherein the food composition is a water-based culinary sauce, a dairy-based culinary sauce, or a tomato-based culinary sauce.

## Patentansprüche

1. Verfahren zum Herstellen einer Lebensmittelzusammensetzung, wobei das Verfahren die folgenden Schritte umfasst:
- Gelieren eines stärkefreien Hydrokolloidpolymers in einer wässrigen Lebensmittelmatrix;
- Zugeben eines natriumfreien Metallsalzes zu der Lebensmittelmatrix vor und/oder während des Gelierens des stärkefreien Hydrokolloidpolymers in einer Menge von 0,01 bis 5 Gew.-% bezogen auf die Lebensmittelzusammensetzung;
- Abkühlen der Lebensmittelmatrix, die das gelierte Hydrokolloidpolymer umfasst; und
- Zugeben von Natrium zu der abgekühlten Lebensmittelmatrix, um die Lebensmittelzusammensetzung zu bilden.

2. Verfahren nach Anspruch 1, das ferner den Schritt des Gefrierens der Lebensmittelzusammensetzung nach der Zugabe des Natriums zu der abgekühlten Lebensmittelmatrix umfasst.

3. Verfahren nach Anspruch 1 oder 2, wobei das Metallsalz ausgewählt ist aus der Gruppe bestehend aus einem Kaliumsalz, einem Calciumsalz und einem Magnesiumsalz.

4. Verfahren nach einem der Ansprüche 1 bis 3, wobei das Metallsalz in einer Menge von 0,1 bis 3 Gew.-%, bezogen auf die Lebensmittelzusammensetzung, zugegeben wird.

5. Verfahren nach einem der Ansprüche 1 bis 4, wobei das Gelieren des stärkefreien Hydrokolloidpolymers durch Erhitzen des stärkefreien Hydrokolloidpolymers in der wässrigen Lebensmittelmatrix erzielt wird.

6. Verfahren nach Anspruch 5, wobei das Erhitzen darin besteht, die Lebensmittelmatrix, die das stärkefreie Hydrokolloidpolymer umfasst, über einen Zeitraum von 1 bis 20 Minuten einer Temperatur von 50 bis 125 °C auszusetzen.

7. Verfahren nach einem der Ansprüche 1 bis 6, wobei das Abkühlen der Lebensmittelmatrix darin besteht, die Lebensmittelmatrix einer Temperatur von 4 bis 50 °C auszusetzen.

8. Verfahren nach einem der Ansprüche 1 bis 7, wobei das stärkefreie Hydrokolloidpolymer ausgewählt ist aus der Gruppe bestehend aus Xanthan, Carrageen, Pektin, Cellulose, Agar, Gelatine, Gellan, Galactomannan, Gummiarabikum, Guarkernmehl, Johannisbrotkernmehl und Alginat oder einer Kombination davon.

9. Verfahren nach Anspruch 8, wobei das stärkefreie Hydrokolloidpolymer ausgewählt ist aus der Gruppe bestehend aus Xanthan, lota-Carrageen und Kappa-Carrageen oder einer Kombination davon.

10. Verfahren nach einem der Ansprüche 1 bis 9, wobei das stärkefreie Hydrokolloidpolymer in der Lebensmittelzusammensetzung in einer Menge von 0,05 bis 6 Gew.-%, bezogen auf die Lebensmittelzusammensetzung, vorliegt.

11. Verfahren nach Anspruch 10, wobei das stärkefreie Hydrokolloidpolymer in der Nahrungsmittelzusammensetzung in einer Menge von 0,1 bis 3 Gew.-%, bezogen auf die Lebensmittelzusammensetzung, vorliegt.

12. Verfahren nach einem der Ansprüche 1 bis 11, wobei das Natrium in Form von Natriumchlorid in einer Menge von 0,1 bis 5 Gew.-%, bezogen auf die Lebensmittelzusammensetzung, zugegeben wird.

13. Verfahren nach Anspruch 12, wobei das Natrium in Form von Natriumchlorid in einer Menge von 0,2 bis 2,5 Gew.-%, bezogen auf die Lebensmittelzusammensetzung, zugegeben wird.

14. Lebensmittelzusammensetzung, die durch das Verfahren nach einem der Ansprüche 1 bis 13 erhältlich ist.

15. Lebensmittelzusammensetzung nach Anspruch 14, wobei die Lebensmittelzusammensetzung eine Kochsoße auf Wasserbasis, eine Kochsoße auf Milchbasis oder eine Kochsoße auf Tomatenbasis ist.

## Revendications

1. Procédé de production d'une composition alimentaire, le procédé comprenant les étapes consistant à :
- gélifier un polymère hydrocolloïde non amylacé dans une matrice alimentaire aqueuse ;
- ajouter un sel de métal non sodique à la matrice alimentaire avant et/ou pendant la gélification du polymère hydrocolloïde non amylacé en une quantité de 0,01 à 5 % en poids par rapport à la composition alimentaire ;
- refroidir la matrice alimentaire comprenant le polymère hydrocolloïde gélifié ; et
- ajouter du sodium à la matrice alimentaire refroidie pour former la composition alimentaire.

2. Procédé selon la revendication 1, comprenant en outre l'étape de congélation de la composition alimentaire après l'addition du sodium à la matrice alimentaire refroidie.

3. Procédé selon la revendication 1 ou 2, dans lequel le sel métallique est choisi dans le groupe constitué par un sel de potassium, un sel de calcium et un sel de magnésium.

4. Procédé selon l'une des revendications 1 à 3, dans lequel le sel métallique est ajouté en une quantité de 0,1 à 3 % en poids par rapport à la composition alimentaire.

5. Procédé selon l'une des revendications 1 à 4, dans lequel la gélification du polymère hydrocolloïde non amylacé est réalisée par chauffage du polymère hydrocolloïde non amylacé dans la matrice alimentaire aqueuse.

6. Procédé selon la revendication 5, dans lequel le chauffage est l'exposition de la matrice alimentaire comprenant le polymère hydrocolloïde non amylacé à une température de 50 à 125 °C pendant 1 à 20 minutes.

7. Procédé selon l'une des revendications 1 à 6, dans lequel le refroidissement de la matrice alimentaire est l'exposition de la matrice alimentaire à une température de 4 à 50 °C.

8. Procédé selon l'une des revendications 1 à 7, dans lequel le polymère hydrocolloïde non amylacé est choisi dans le groupe constitué par le xanthane, le carraghénane, la pectine, la cellulose, l'agar, la gélatine, la gomme gellane, le galactomannane, la gomme arabique, la gomme de guar, la gomme de caroube et l'alginate, ou une combinaison de ceux-ci.

9. Procédé selon la revendication 8, dans lequel le polymère hydrocolloïde non amylacé est choisi dans le groupe constitué par le xanthane, l'iota carraghénane et le kappa carraghénane, ou une combinaison de ceux-ci.

10. Procédé selon l'une des revendications 1 à 9, dans lequel le polymère hydrocolloïde non amylacé est présent dans la composition alimentaire en une quantité de 0,05 à 6 % en poids par rapport à la composition alimentaire.

11. Procédé selon la revendication 10, dans lequel le polymère hydrocolloïde non amylacé est présent dans la composition alimentaire en une quantité de 0,1 à 3 % en poids par rapport à la composition alimentaire.

12. Procédé selon l'une des revendications 1 à 11, dans lequel le sodium est ajouté sous forme de chlorure de sodium en une quantité de 0,1 à 5 % en poids par rapport à la composition alimentaire.

13. Procédé selon la revendication 12, dans lequel le sodium est ajouté sous la forme de chlorure de sodium en une quantité de 0,2 à 2,5 % en poids par rapport à la composition alimentaire.

14. Composition alimentaire, pouvant être obtenue par le procédé selon l'une des revendications 1 à 13.

15. Composition alimentaire selon la revendication 14, la composition alimentaire étant une sauce culinaire à base d'eau, une sauce culinaire à base de produit laitier ou une sauce culinaire à base de tomate.
